# EUROPEAN PATENT SPECIFICATION

(11) **EP 0 241 014 B1**
(45) Date of publication and mention of the grant of the patent: **14.06.1995**
(21) Application number: 87105209.8
(22) Date of filing: 08.04.1987
(51) Int. Cl.: G11B 27/30, H04N 5/92, G11B 20/18

(54) **Recording and reproducing a time code signal together with digital video and audio signals**
Aufzeichnung und Wiedergabe eines Zeitkodesignals zusammen mit digitalen Video- und Tonsignalen
Enregistrement et reproduction d'un signal de code de temps avec des signaux vidéo et audio numériques

(30) Priority: 09.04.1986 JP 81613/86
(43) Date of publication of application: 14.10.1987
(73) Proprietor: SONY CORPORATION, Tokyo 141 (JP)
(72) Inventor: Asai, Toshiya, Shinagawa-ku Tokyo (JP); Kotani, Hiroki, Shinagawa-ku Tokyo (JP); Tatsuzawa, Kaichi, Shinagawa-ku Tokyo (JP)
(74) Representative: Schmidt-Evers, Jürgen, Dipl.-Ing.

(56) References cited:
- US-A- 4 468 710
- JOURNAL OF THE SOCIETY OF MOTION PICTURE ENGINEERS. vol. 94, no. 9, September1985, NEW YORK US pages 914 - 920; REMLEY: "Digital Television Tape Recording:A Report of Progress Toward a Standard"*see page 917,l-h col "Track-Format -page 919,r-h col.,line 14; page 920,middle col.,"Discussion":lines 21-23;figures 3 and 5
- JP-A 61 008777 *RICOH K.K.* Jan.16,1986,&&PATENT ABSTRACTS OF JAPAN, Vol.10,no.154,(P-463)(2210)June 4,1986,
- JP-A 60 231979 *SONY CORP.*November 18,1985,& PATENT ABSTRACTS OF JAPAN, Vol. 10,no. 101 (P-447)(2158)April 17,1986,
- PATENT ABSTRACTS OF JAPAN vol. 7, no. 292 (E-219)(1437) 27 December 1983,& JP-A-58 166886 (NIPPON DENKI K.K.) 03 October 1983,
- SMPTE Journal, Oct.79, p.712-715
- AES Preprint 2359(N8), p.1-22
- AN AUDIO ENGENEERING SOCIETY REPRINT :2359 (N8) Presented at the 80th convention, 1986 March 4-7,Montreux, CH,WATKINSON : "digital audio in MAGNUM DTVR"
- AN AUDIO ENGENEERING SOCIETY PREPRINT:2351 (N5) Presented at the 80th Convention, 1986 March 4-7. Montreux,CH, AUDIO ENGENEERING SOCIETY; New York, USA,WILKINSON et al.:"AUDIO IN THE DVTR"
- SMTE Journal Sept. 1985, p. 914-920

## Description

This invention relates to a method and apparatus for tape recording and/or reproducing a time code signal together with digital video and audio signals.

In a conventional analog video tape recorder (VTR), for example, a time code signal, such as, an SMPTE time code, is recorded in a time code track extending longitudinally along a side edge of the magnetic tape, and also in a recording area for the vertical blanking period of each slant track in which the video signal is recorded. In the reproducing or playback mode, the time code signal is read from the longitudinal time code track along the side edge of the magnetic tape so long as the tape is being driven at an adequate speed, for example, as when the tape is being driven at the normal or standard speed used for recording and playback, or when the tape is being driven at a high tape speed, as in the fast-forward or rewind mode, or at a speed that is slightly reduced relative to the normal tape speed. However, when the tape is being driven at a very slow speed or when the tape is at rest, as in the still reproducing mode, the time code signal is read from the slant tracks. Thus, the time code data can be continuously obtained in the conventional analog video tape recorded without regard to the speed or direction of the tape drive.

In a digital VTR, the digital video signal is shuffled, for example, over 50 lines, before being recorded on the magnetic tape. Therefore, if the time code signal is recorded together with the digital video signal in the slant tracks, for example, as noted above in respect to the conventional analog VTR, it will be difficult to accurately read the time code signal in certain of the tape speed modes employed during playback or reproducing. Therefore, in conventional digital VTRs, the time code signal is recorded only in the time code track extending longitudinally along a side edge of the magnetic tape, and cannot be accurately read during playback in abnormal reproducing modes, such as, the still mode or the very low tape speed mode.

In the documents "Audio Engineering Society Preprint 2351, March 4-7 1986, p. 1-14" and "Audio Engineering Society Preprint 2359, March 4-7 1986", both presented at the 80th Convention in Montreux, a novel recording format, namely the SMPTE-format, has been introduced. Although no concrete reference is made to the time code, in the conclusions of the paper a brief proposal is given concerning the usage of the user bytes for implementing a time code.

The general relation between the frame period and the time code may be obtained from the documents "SMPTE-Journal, October 1979, Volume 88, p. 712-715" and "SMPTE-Journal, September 1985, p.914-920". Additional it is proposed to insert the time code in the digital audio records. However, no effective circuit concept for reproduction is obtained from these documents.

It is the object of the present invention to provide a method and an apparatus for easy and save reproduction of the time code from the recorded digital video/audio signal, which especially is suitable for the SMPTE recording format.

The object is solved by the features of claim 1 concerning the method and claim 6 concerning the apparatus.

Further developments of the invention are given in claims 2 to 5.

The invention is described in the following with reference to the drawings, in which:
Fig. 1 is a schematic diagram showing a pattern of slant tracks in which signals are recorded on a magnetic tape by a digital VTR of a tape to which this invention is advantageously applied;
Fig. 2 is a more detailed schematic diagram showing an arrangement of audio sectors within an audio signal segment recored in the track pattern of Fig. 1;
Fig. 3 is a diagrammatic view showing an audio data block layout used in the digital VTR to which to this invention is advantageously applied;
Fig. 4 is a schematic block diagram showing recording and reproducing sections of the digital VTR according to an embodiment of this invention;
Fig. 5 is a diagrammatic view showing outer error correcting encoding and inner error correction encoding for video data used in the digital VTR to which this invention is advantageously applied;
Fig. 6 is a diagrammatic view showing an input audio data block layout receivable by the digital VTR to which this invention is advantageously applied; and
Fig. 7 is a schematic diagram illustrating error detection in successive time code signals reproduced during scanning across the tape in an abnormal reproducing mode, and to which reference will be made in explaining how a time code signal is accurately read even in such abnormal reproducing mode.

Initially, it should be noted that, for digital recording on magnetic tape, the smallest recordable wave length within which 2 bits can be recorded has been standardized at 0.9 micrometer, which allows the recording of 2.2 bits per micrometer. Further, the standard data rate for recording digital video signals is 216 Mbit/sec., so that, in the case of recording NTSC signals comprised of 60 fields per second, 3.6 Mbit need to be recorded for each field. Therefore, given the limitation of 2.2 bits per micrometer, a magnetic track with a length of 180 cm would be required for each field. If it were desired to record a field in a single, unsegmented helical or slant track having a length of 180 cm. on the magnetic tape, the diameter of the head drum would have to be greater than 50 cm. Accordingly, digital VTRs cannot record a field in a single unsegmented helical or slant track, but rather employ field segmentation for recording of the digital video signal.

More specifically, in the case of the digital recording of NTSC signals, out of the 262.5 lines constituting each field, only the last 250 lines from each field are recorded, and 10 helical or slant tracks are employed to record the information of one field of the video signal. The 250 lines of a field to be recorded are first divided into 5 video segments, each comprised of 50 lines and each recorded in 2 tracks. Further, in order to ensure minimum sensitivity of the recorded signal to head failures, drop outs or other tape defects, the incoming video signal is distributed among 4 adjacent tracks. Since the 2 tracks available for each segment of the video signal to be recorded cannot be divided by 4, 2 video sectors are formed within each helical or slant track and the data for each segment of the video signal are recorded in 2 pairs of video sectors respectively located in four adjacent slant tracks.

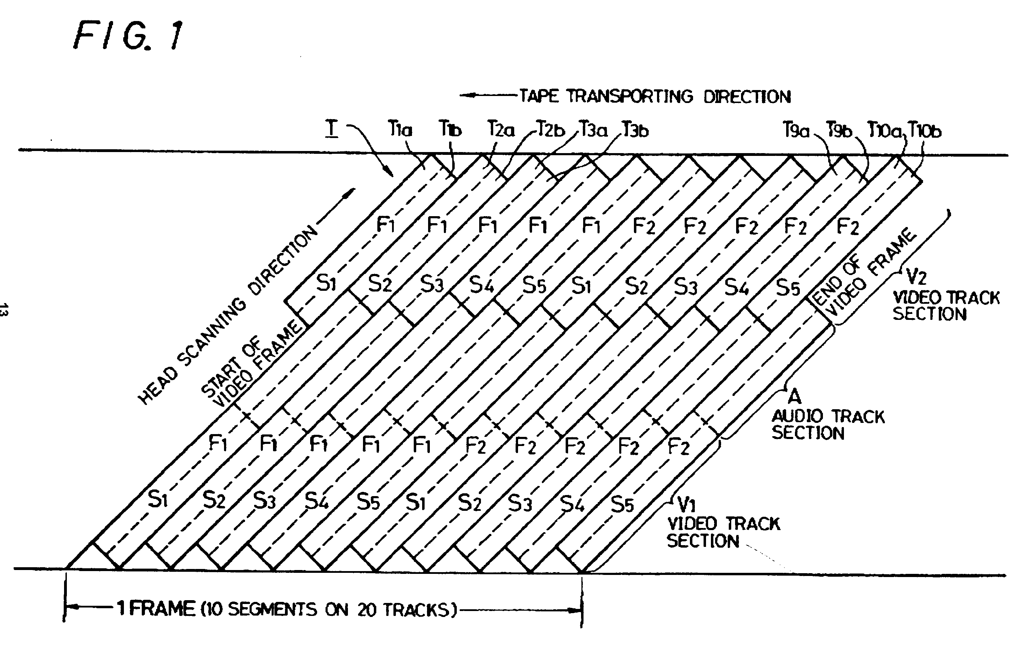

A digital VTR for recording and reproducing component digital video signals, for example, in the 4:2:2 component system, and which is of a type to which the present invention is advantageously applied, forms the pattern of slant tracks T shown on Fig. 1. Such recorded pattern of slant tracks T is seen to include 10 pairs of slant Tracks T₁ₐ,T_{1b};T₂ₐ,T_{2b};....T₁₀ₐ, T_{10b}, that is, a total of 20 slant tracks in which are recorded one frame (2 fields) of a digital video signal according to the HTSE system and also digital audio signals for 4 audio channels associated with the respective frame. Each of the slant tracks T is shown to include an intermediate section A for receiving the recorded audio signal, as hereinafter described in detail, and which is spaced from the opposite ends of the respective track, and video track sections V₁ and V₂ which are located before and after the intermediate audio track section A in the respective track T.

In Fig. 1, the video track sections which contain video sectors of the first and second fields of the illustrated frame are identified at F₁ and F₂, respectively, and the video track sections which contain video sectors included in the 5 different segments of each of the fields are identified at S₁,S₂,S₃,S₄ and S₅, respectively.

As earlier noted, each video segment is recorded in 2 pairs of video sectors located in 4 adjacent helical tracks to be scanned by the different rotary magnetic heads. Thus, for example, in the track pattern shown on Fig. 1, the video segment S₂ of the first field F₁ is recorded in the pair of video sectors in video track section V₂ of tracks T₂ₐ and T_{2b}, and in the pair of video sectors in video track section V₁ of tracks T₃ₐ and T_{3b}.

In the digital VTR of the type to which the present invention is desirably applied, audio records are formed independently for each of the 4 audio channels. The audio data of each of the 4 audio channels are processed in audio segments each corresponding in duration to 4 slant tracks or 1/5 of a video frame. Each of the slant tracks T contains 4 audio signal sectors disposed successively in the intermediate track section A between the 2 video sectors disposed in the respective track sections V₁ and V₂. Thus, in a complete scan by a head along one of the slant tracks T, the scanning head reproduces signals from a video sector in track section V₁, 4 audio sectors in track section A and another video sector in track section V₂. Although the audio track section A is shown on Fig. 1 to be almost as long as each of the video track sections V₁ and V₂, in actual practice, the audio track section A contains, for example, 5 x 134 bytes and is substantially shorter, in the scanning direction, than each of the video track sections V₁ and V₂ containing, for example, 160 x 134 bytes. The foregoing results from the fact that a digital audio channel has less than one-half of one percent of the video bit rate. Therefore, although the recording bit rate for the audio signal is almost the same as for the video signal, the transmission bit rate is much lower and the audio signal is endangered by individual errors on the tape to a greater degree than the video signal. Furthermore, the human ear is more sensitive to errors or defects than the human eye.

In order to reduce the sensitivity of the audio signal to errors, blocks respectively corresponding to odd and even samples of an audio segment of each of the four audio channels, and duplicates thereof, are recorded in respective audio sectors in a scattered arrangement within the intermediate or audio track sections A of the group of 4 tracks T corresponding to the respective audio segment.

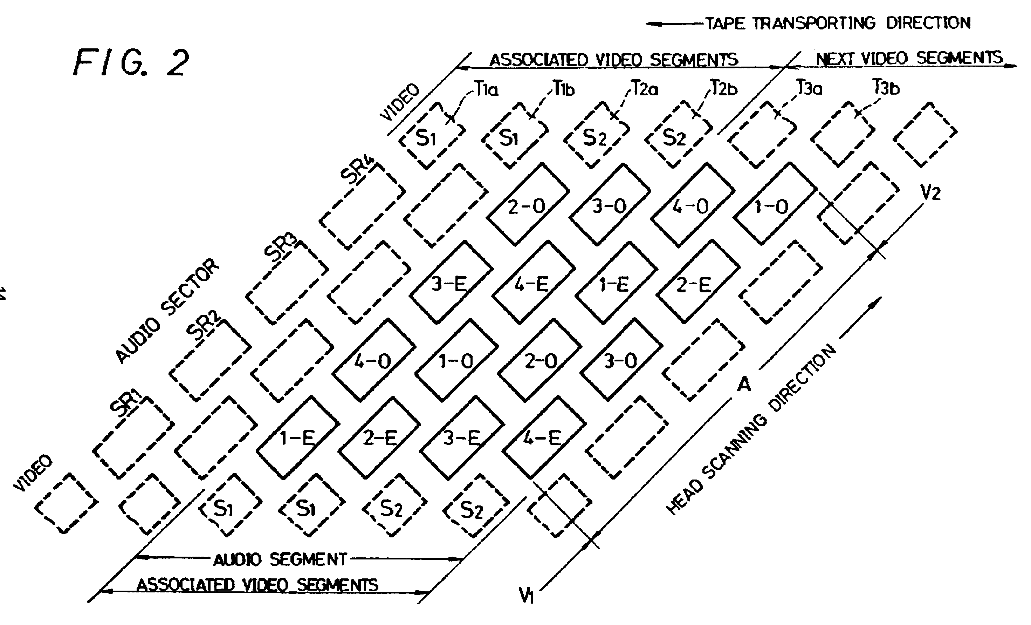

Since each audio segment corresponds in duration to 4 slant tracks which each contain 4 audio sectors, 16 audio sectors are available for recording the 16 blocks comprised of odd and even samples of 4 audio channels and duplicates thereof, and the 16 audio sectors making up an audio segment are preferably recorded in the optimum distribution or scattered arrangement shown on Fig. 2.

The optimum distribution shown in full lines on Fig. 2 is, for example, for the audio segment corresponding in duration to the 4 slant tracks T₂ₐ, T_{2b}, T₃ₐ and T_{3b}. In such distribution, 4 rows of audio sectors SR₁,SR₂,SR₃ and SR₄ are arranged in the 4 slant tracks T₂ₐ, T_{2b}, T₃ₐ and T_{3b} in the scanning direction of the heads. The first audio sectors in the 4 tracks, and which appear in the order 1.E, 2.E, 3.E and 4.E in the row SR₁, respectively contain even samples of the first, second, third and fourth audio channels. In the second row SR₂, the audio sectors appearing in the order 4.0, 1.0, 2.0 and 3.0, respectively contain odd samples of the fourth, first, second and third audio channels. The audio sectors 3.E,4.E,1.E and 2.E appearing in that order in the third row SR₃ contain the same data as the similarly identified sectors in row SR₁, but with such sectors appearing in a different order. Similarly, the sectors 2.0, 3.0, 4.0 and 1.0 appearing in that order in row SR₄ have the same data recorded therein as in the correspondingly identified audio sectors in row SR₂, but with the order of such sectors being changed.

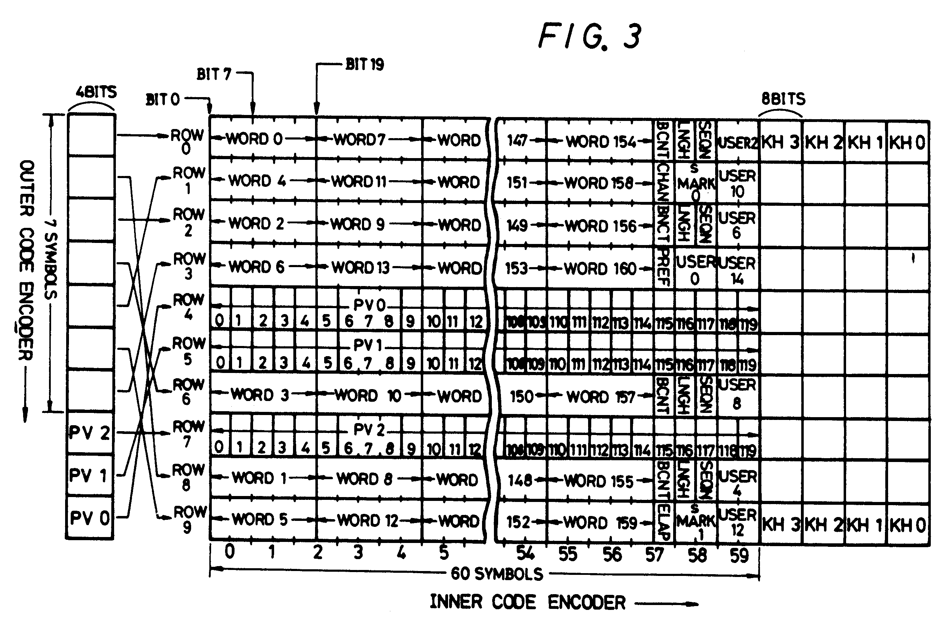

Each audio segment contains approximately 320 samples of each audio channel. Each segment of each audio channel is processed into 2 audio blocks of 10 x 60 bytes, each corresponding to a respective sector. One block contains approximately 160 data words corresponding to the even samples, as shown on Fig. 3, while the other block similarly contains approximately 160 data words corresponding to the odd samples. In each case, as shown, the data portion of the block is 7 x 60, that is, data words are arranged in the rows identified as ROWS 0,1,2,3,6,8 and 9, while ROWS 4,5 and 7 contain outer error protection data of the Reed-Solomon type. Each block, and hence each audio sector, is further shown to include user control words, interface control words and processor control words.

More particularly, each block, and hence each audio sector, has a data format including data regions WORD 0,1,2,...,160, check character data regions PV0, PV1, PV2 and contains 8 user control words of 8 bits which, in the illustrated even block, are identified as USER 0,2,4,6,8,10,12 and 14, respectively.

The interface control words are shown, for example, to include a channel use word CHAN of 4 bits which specifies the usage of two input channels in an interface data stream, a pre-emphasis word PREF of 4 bits which specifies the usage of pre-emphasis in the audio coding, an audio data mode word LNGH of 4 bits which is written 4 times in each block for security and which specifies the audio word length and the usage of the ancillary bits Status User and Validity, and block sync location words S MARK O and S MARK 1, each of 8 bits which specify the location of the first and last block sync associated with channel status and user data.

The processing control words include a word count word B CNT of 4 bits written 4 times in each block for security and specifying the number of useful data words in such block, a sequence word SEQN of 4 bits also written 4 times in each block and which specifies a sequence of 15 blocks to aid processing in high- speed data recovery, and an overlap edit word E LAP of 4 bits which specifies the segment associated with an overlap edit transition.

As earlier noted, each block or audio sector includes 8 user control words or regions of 8-bit length, that is, of 1 byte each, and, therefore, each audio sector includes a total of 8 bytes of user control regions. The SMPTE time code signal consists of codes representing hours, minutes, seconds and frames, or of 8 bytes excluding the sync code, as will be also apparent from the previously noted Japanese Patent Publication No. 23993/83.

Generally, in accordance with the present invention, the above noted SMPTE time code signal is recorded as the user control words of selected blocks of each audio segment corresponding to the odd and even samples of at least one of the audio channels and the duplicates of such selected blocks, with the recorded time code signal being the same for all of the segments of the audio signal recorded in the intermediate sections A of the slant tracks T corresponding to a common one of the video frames. By way of example, the SMPTE time code signal, which consists of codes for hours, minutes, seconds and frames at 30 Hz, may be recorded in the 8 user control word regions of the sectors 4.E and 4.O in which are recorded the even and odd samples, respect- ively, of the fourth audio channel, with the time code signal recorded as the user control words in audio sectors 4.E and 4.O being the same for all of such audio sectors in the 20 slant tracks T containing the digital video signal for one video frame. Since there are 5 audio segments corresponding to each video frame and 16 audio sectors in each audio segment as indicated clearly on Fig. 2, there are a total of 80 audio sectors recorded in the intermediate sections A of the slant tracks containing one video frame and, in the described example of the invention, the SMPTE time code signal is recorded as the user control words in 20 of such audio sectors. Thus, the user control words in the remaining 60 audio sectors recorded in the slant tracks containing one video frame are still available for other desired control purposes. It will be appreciated from Fig. 2 that, as a result of the scattered arrangement of the 16 audio sectors corresponding to an audio segment, the audio sectors 4.E and 4.O containing the recorded SMPTE time code signal are differently positioned in each of the 4 slant tracks corresponding to an audio segment, thereby increasing the probability that audio sectors containing the recorded SMPTE time code signal will be scanned by rotary heads of the digital VTR even during playback in abnormal reproducing modes. Further, it should be understood that the positions and number of the audio sectors in each audio segment in which the time code signal is recorded may be changed from that indicated above, that is, the time code signal may be recorded as the user control words in audio sectors in addition to, or other than the indicated audio sectors 4.E and 4.O so long as the recorded SMPTE time code signal does not interfere with other user control data being recorded in the respective audio sectors.

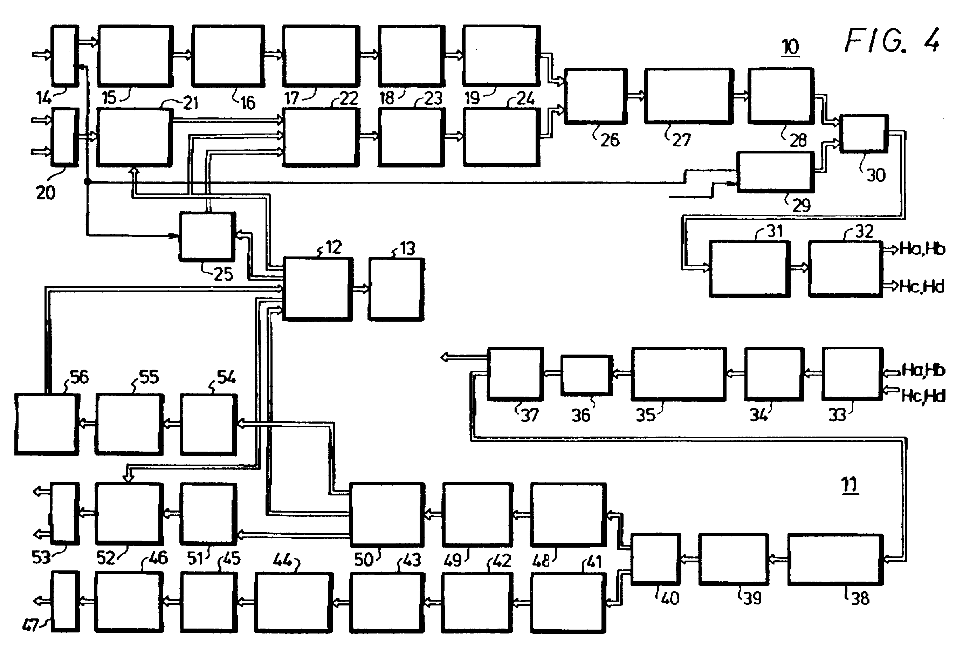

Referring now to Fig. 4, it will be seen that a digital VTR for recording and reproducing a time code signal together with digital video and audio signals according to an embodiment of this invention includes a recording section 10 and a reproducing section 11 associated with a system controller 12 and a tape transport controller 13 by which the speed of movement of the magnetic tape is controlled for determining the reproducing mode. In the recording section 10, the input digital video signal, consisting of 250 lines per field and 720 pixels per line, is supplied through an input interface 14 to a source mapping circuit 15 which carries out one-for-one mapping of each video data byte in a known manner so that, for the most probable distribution of digital errors, there is a reduction in the subjective peak error produced in a pixel and to reduce the DC component of the signal. The mapped video data bytes are supplied to a distributor 16 constructed, for example, as a demultiplexer which effects inter-sector shuffling, that is, the distribution of the 50 lines making up a video segment (one-fifth of a field) among four corresponding video sectors in a predetermined sequence so as to increase the probability that uncorrectable samples are surrounded by error-free data words to permit so-called error concealment. The distributed video signal from distributor 16 is supplied to an intra-line shuffling circuit 17 having four memories for the four sectors, which effects the distribution of the samples within each line and within each sector so as to form video data outer code blocks. In the next block 18 outer error coding is effected on the outer code blocks by adding 2 bytes KV0, KV1 to every 30 bytes of the video signal for use as check words in detecting and correcting errors during reproduction. Then, sector array shuffling is effected in a block 19, that is, within each video sector, the sample bytes representing the pixels and the check bytes are rearranged so as to be recorded in a pseudo-random sequence rather than in chronological order, as illustrated in Fig. 3. The combination of intra-line shuffling by block 17 and sector array shuffling by block 19 constitutes an intra-sector shuffling.

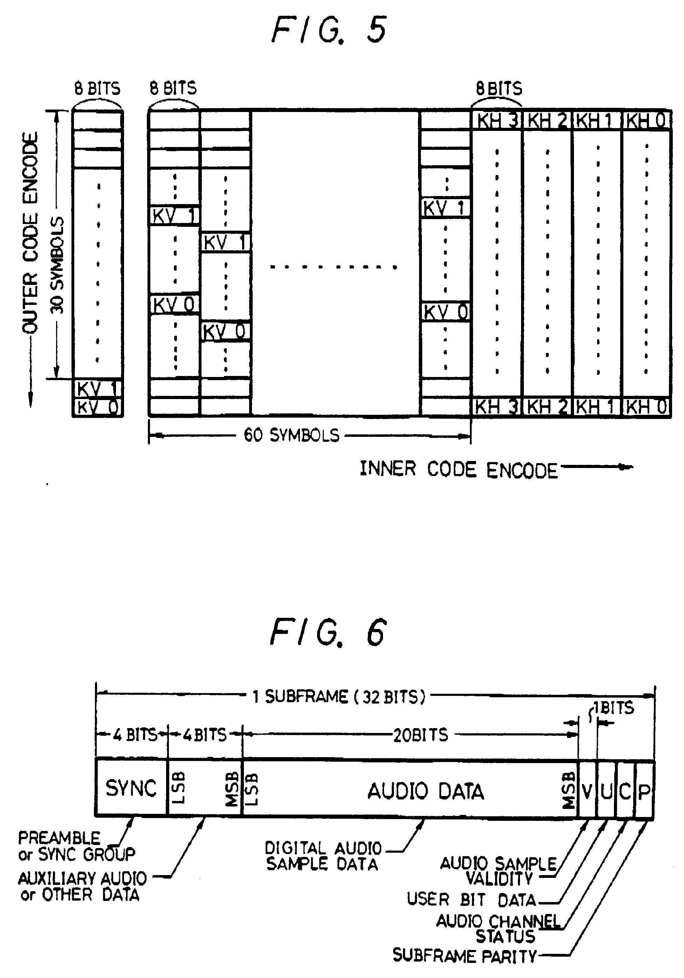

The input digital audio signal for each of the four audio channels is supplied in the AES/EBU format shown in Fig. 6. Each subframe is 32 bits long and includes 4 bits of synchronizing data, 4 bits of auxiliary audio data, 20 bits of audio data, and 1 bit each of validity data, user data, channel data and parity data. This input audio data is applied through an input interface 20 to an audio data preprocessor 21 in which the audio data for each audio segment is distributed among the 16 audio sectors corresponding to the odd and even samples of the four audio channels and duplicates thereof, respectively, as earlier described. In particular, in audio data preprocessor 21, 20 bits are selected from the 24 bits comprising the audio, validity, user, channel and parity data to form words 20 bits long, under the control of a system controller 12 discussed below. For example, when the sampling frequency for the digital audio data is approximately 48 kHz, there are about 1600 samples per channel in each frame, and the samples in each frame are distributed by audio data distributor 22 to 10 audio sectors each of which may contain 160 audio samples. The audio signal is then passed through a block 23 in which outer error coding of the audio signal is effected. In particular, the audio data in word data regions WORD 0,1,...,160, the SMPTE time code signal in the 8 user data regions and the additional control data in the other regions are supplied to block 23 in unit s of 4 bits so as to generate check characters 4 bits long for the data regions PV0, PV1, etc. forming the audio data outer error correction code as shown in Fig. 3. It is not necessary to add CRC codes (Cyclic Redundancy Check Codes) such as the Vertical Interval Time Codes (VITC) for the time codes since the audio sector time code (ASTC) is itself protected by the error correction codes for the audio data. It is also not necessary to add the VITC as a field mark, as the reproduced time code is identified by the segment ID and the sector ID, nor to add sync bits, as sync data is recorded in each audio sector. Then, the audio signal is subjected to shuffling in block 24, that is, the audio data words in each audio sector are rearranged in a pseudo-random sequence, as further shown in Fig. 3. The digital video signal from block 19 and the digital audio signal from block 24 are supplied to a time-multiplexer 26 which generates a signal with a sequence of video and audio sectors corresponding to the track pattern shown on Fig. 1, that is, with two video sectors to be recorded in track sections V₂ and V₁ followed by four audio sectors to be recorded in intermediate track section A.

Further, in the recording section 10 of the apparatus embodying this invention, a time code generator 25 receives a video sync signal from the interface 14 and provides, in synchronism therewith, an SMPTE time code signal which, for example, is suitably supplied under the control of system controller 12 to the audio data distributor 20 so that the 8 bytes of the time code signal appear at the 8 user control word regions of the selected audio sectors, for example, the audio sectors 4.E and 4.O, as earlier described. Thus, in the time-multiplexed data stream from mutliplexer 26, the selected audio sectors 4.E and 4.O contain the corresponding time code signal in the respective user control word regions, and which only changes from frame to frame.

The digital output signal from multiplexer 26 is supplied to an inner error encoder 27 in which additional check bits are added for improving error protection. In particular, the data words of each audio data block are converted into 60 bytes, each 8 bits long, so that they may be inner error encoded together with the video data. The inner error encoding creates blocks having 60 data bytes and 4 check bytes KH0-KH3, as illustrated in Figs. 3 and 5. In order to reduce the DC content of the digital video and audio signals prior to recording, the output of inner error coder 27 is supplied to a block 28 in which it is randomized or scrambled. At this point, the digital signal is still in byte form and, for the purposes of recording, this byte-oriented signal is supplied through a multiplexer 30 and is converted into a serial bit signal in a parallel-to-serial converter 31. However, in order to enable the byte limits to be detected in the serial bit flow, a suitable identification is recorded together with the serial signal. For this purpose, each video sector is converted into 160 sync blocks and each audio sector is converted into 5 sync blocks, with each sync block consisting of a synchronization pattern and an additional identification pattern, followed by 128 bytes of video or audio data, as the case may be. A circuit 29 timed by the video sync signal from input interface 14 is provided for generating the necessary sync and identification patterns which are supplied to multiplexer 30 for suitable time-multiplexing with the digital video signal and digital audio signal with which the time code signal is associated. Finally, the output of multiplexer 30 is supplied to parallel-to-serial converter 31 and the resulting serial signal is then supplied to a recording circuit 32 for application to a rotary head assembly having 4 helical heads Ha, Hb, Hc, Hd which have closely arranged gaps for recording in adjacent tracks.

In the reproducing section 11 of the apparatus illustrated on Fig. 4, the signal reproduced by the 4 rotary or helical heads Ha,Hb,Hc,Hd are supplied to a recording circuit 33 including an equalizer which extracts binary data signals therefrom. The extracted signals are supplied to a clock regeneration circuit 34 for regenerating the clock signals in the binary data and thence to a serial-to-parallel converter 35 and a time base correcting circuit 36. From there the time base corrected data are supplied to a detector 37 which detects the synchronization and identification patterns for use in converter 32 in converting the reproduced serial signal back to the byte-oriented or 8-bit parallel data format. The detected synchronization pattern is further used to achieve the correct derandomization of the byte-oriented signal in a derandomizer 38, whereupon the derandomized signal is supplied to an inner error detection/correction circuit 39. In such circuit 39 the inner error code is used to correct errors in the video data, audio data and the time code signals in the user data regions where possible by using the 4 check bytes KH0-KH3, which can correct errors up to 2 bytes. However, for most of the errors, the inner error code is suitable only for determining that errors have occurred within an error protection block which is then identified by a respective flag. Thereafter, as will be described, the outer code is used for determining where within a flagged block errors have occurred.

Following the inner error detection/correction in circuit 39, the video signal path, and the audio and time-code signal paths diverge through a data demultiplexer 40. In the video signal path, the original chronological sequence of the samples is reinstated in an intra-sector deshuffling circuit 41 and then the outer code is used in a circuit 42 to detect the flagged blocks and to correct the errors therein, wherever possible. Then, an intra-line deshuffle in a deshuffler 43 and an inter-sector deshuffle in a deshuffler 44 are effected and source remapping is effected in a circuit 45. Finally, in the video path, a circuit 46 may be provided for effecting concealment of those errors remaining after the outer error correction, and also for effecting time base correction, whereupon the reproduced digital video signal is derived through an interface 47.

Similarly to the above, in a path shared by the audio and time code signals from circuit 39 through demultiplexer 40, the original chronological sequence of the samples in the audio sectors is reinstated in an audio data deshuffling circuit 48, whereupon the outer code is used to detect the errors in the flagged blocks and to correct such errors, if possible, in an outer error correction circuit 49. In particular, erroneous time code signals and erroneous audio data are corrected up to 3 characters of 4 bits each by using the 4 bit check characters PV0,PV1,PV2 of the audio outer error correction code, which has a greater error correcting efficiency than the corresponding video outer error correction code using check bytes KH0-KH3. In the next block or redistributor 50, the distribution of the audio data for each audio segment among the respective sixteen audio sectors is reversed, and the corrected control data other than the corrected time code signals are supplied to system controller 12. The redistributed audio data is supplied to an error concealment and time base correcting circuit 51 in which any remaining uncorrected audio data identified by error flags added in inner error decoder 39 and audio data outer error decoder 49 are concealed and time base correction is effected. The audio data from block 51 are then supplied to an audio data post-processing circuit 52 to be reformed into the AES/EBU format shown in Fig. 6 and then to an output interface 53 from which the several audio channels are output.

The time code signal recorded at the user control word regions of selected audio sectors, for example, the audio sectors 4.E and 4.O as described above, is extracted from the data flow at redistributor 50 and supplied to a time code error detector 54 which detects error flags raised at the user control word regions in those cases where the reproduced time code signal could not be corrected for error. A memory 55 is provided to store the error flags identifying those user control word regions of the selected audio sectors at which errors have been detected, and further to store the data appearing in the user control word regions at which no error flags are raised, whereupon, as hereinafter further described, a time code reader 50 can read or assemble a time code signal from the stored data.

The above described arrangement operates as follows for reading the recorded time code signal:

In the normal-speed reproducing mode, and in reproducing operations employing tape speeds close to the normal speed, as established by tape transport control 13, a time code signal recorded at the user control word regions of an audio sector 4.O or 4.E is reproduced from each scanned track T so that time code signals of the same data content are reproduced 20 times during each video frame. Since some of these reproduced time code signals may not have been corrected for error in block 35, the resulting error flags are detected in block 48. Further, in the normal speed reproducing mode, system controller 12 causes memory 55 to store the time code signal recorded at the user control word regions of an audio sector for which no error flags have been raised. The time code reader 56 reads or indicates the time code identified by the first time code signal indicated to be free of error among the 20 time code signals reproduced during a video frame.

When a high-speed reproducing mode is established by control 13, time code signals have different data contents as to hours, minutes, seconds and/or frames may be reproduced at random during a frame period. In other words, in the normal speed reproducing mode, during each frame which comprises 5 audio segments, the time code signals obtained from the sectors 4.E and 4.O of the 5 audio segments all have the same data content, whereas, in the high-speed reproducing mode, the time code signals reproduced from the sectors 4.E and 4.O of the 5 audio segments occurring during a frame period have different data contents. In the high-speed reproducing mode, if the respective audio sectors 4.E and 4.O reproduced during a frame period are found to have no error flags raised at any of its user control word regions, system controller 12 causes the time code signal recorded at such error-free user control word regions to be read by reader 56. If two or more audio sectors 4.E, 4.O are reproduced during a frame period with no error flag raised at any of the user control word regions of such audio sectors, system controller 12 causes time code reader 56 to read the time code signal read from the audio sector in the earliest occurring audio segment. If, in the high-speed reproducing mode, no audio sector 4.E, 4.O is reproduced during a frame period without any error flags raised at the respective user control word regions, then time code reader 56 continues to indicate the last established time code, for example, the time code corresponding to the time code signal read during the previous frame period. Since it is not necessary to accurately maintain the continuity of the time code in the high-speed reproducing mode, the foregoing procedure for determining the time code is satisfactory in the high-speed reproducing mode.

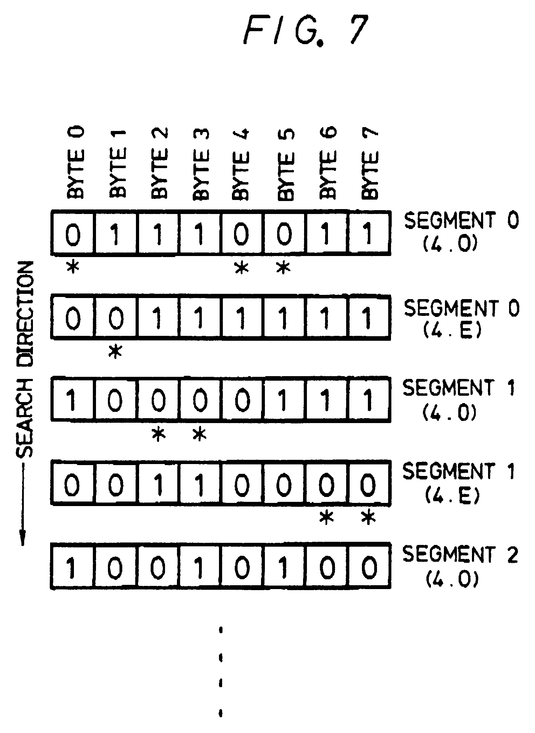

On the other hand, in the low-speed or still reproducing mode, it is desirable to maintain the continuity of the time code as much as possible even though, in some scans across the tape, the time code signal may not be reproduced. Therefore, in the low-speed or still reproducing mode, system controller 12 responds to the establishment of such mode by tape transport control 13 to perform the following steps:
(1) If, during a frame period, an audio sector 4.E or 4.O is reproduced with no error flag raised at any of its user control word regions, the time code signal recorded at such regions is read to determine the respective time code.
(2) If no audio sector 4.E or 4.O is reproduced during a frame period without any error flag at its user control word regions, a time code assembling procedure is employed under the control of system controller 12. More specifically, in such procedure, during the scanning of each track in a frame period, only data recorded at user control word regions at which no error flags are raised are collected or stored in memory 55 and, upon the collection of error-free data for each of the 8 bytes of the time code signal, the latter is assembled from the stored data. For example, as shown diagramatically on Fig. 7, during a frame period, the user control word regions of the audio sectors in the several audio segments in a frame are checked in error detector 48 for the presence of error flags thereat in the order of the sectors 4.O, 4.E of audio segment A, sectors 4.O, 4.E of audio segment B, sectors 4.O, 4.E of audio segment C, and so forth. In Fig. 7, the symbol "O" has been applied to identify each user control word region at which no error flag is raised, while the symbol "1" is applied to indicate the presence of an error flag at the respective user control word region. As the detection of the error flags proceeds, data corresponding to a particular byte of the time code signal and appearing for the first time at a user control word region which does not have an error flag associated therewith is collected or stored in memory 55, as indicated by an * appearing under the respective region on Fig. 7. Finally, when correct data has been collected or stored in respect to the 8 bytes of a time code signal, for example, at the completion of audio sector 4.E of audio segment B in Fig. 7, reader 56 assembles the respective time code signal from the stored data.
(3) The time code signal which is assembled, as described above, is suitably compared in system controller 12 with the previously available time code signal to determine if continuity of the time code has been maintained. If such continuity does exist, the assembled time code signal is employed. On the other hand, if continuity does not exist, the procedure for collecting the data and assembling a time code signal therefrom is repeated. The foregoing operation is employed in order to exclude from use any time code signal composed of data derived from audio sectors corresponding to different frames of video.

In the above description of an embodiment of this invention, the time code signal has been recorded in only the audio track sections A of the slant tracks. However, it will be apparent that the time code signal may also be recorded in a longitudinal track extending along a side edge of the magnetic tape, as in the prior art, so as to permit the reproduction of the time code signal either from the slant tracks or from the longitudinal track, as circumstances might require.

## Claims

1. A method for reproducing a time code signal contained in a digital video/audio signal, whereby the digital video/audio signal is recorded on a recording tape in successive slant tracks extending obliquely across the tape in a manner that the audio signal and the time code signal is recorded in intermediate sectors of the tracks, the video signal is located before and after the intermediate sectors and the time code signal is multiplied and identically recorded in the intermediate sectors of several tracks forming a frame comprising the steps of:
- error detecting and/or correcting at least the multiplied time code signal and setting error flags for the bytes of the multiplied time code signal, which have been detected but could not be corrected,
- separating the multiplied time code signal from the digital video/audio signal
**characterized by** the steps of
- detecting the error flags of the multiplied time code signal,
- storing the bytes of the time code signal being not erroneous within the multiplied time code signal and appearing for the first time and storing the error flag of the bytes, if the first time code signal is erroneous,
- collecting a time code signal within the multiplied time code signal in respect to the stored error flags and the bytes of the time code signals not comprising error flags, and
- indicating at least once within each frame period of the video/audio signal the stored time code signal, if there are no remaining bytes comprising error flags and otherwise indicating the time code signal of a previous frame period.

2. A method according to claim 1,
**characterized in that**
sections (V1,V2) of the tracks comprising video signal are relatively long in respect to the intermediate sections (A) comprising the sectors of the digital audio signal and the time code signal.

3. A method according to claim 2,
**characterized in that**
- the digital audio signal is processed in segments, each corresponding in duration to the time required for scanning of a group of the slant tracks, comprising a plurality of channels of the digital audio signal to be recorded, each of the segments of the audio signal includes blocks respectively comprised of data bytes, representing odd and even samples of each channel;
- each block further comprises user control bytes and each group of the slant tracks has a number of audio sectors in the intermediate sections sufficient to record therein the respective blocks corresponding to odd and even samples of each channel and duplicates thereof in a scattered arrangement within the intermediate sections of the corresponding group of slant tracks; and
- the time code is recorded as said user control bytes of selected blocks of each audio segment corresponding to the odd and even samples of at least one of the channels and the duplicates of the selected blocks and the time code signal is the same for all segments of the audio signal recorded in the intermediate sections of the slant tracks corresponding to a respective one of the frames.

4. A method according to claim 3,
**characterized in that**
the digital video signal for each frame is recorded in twenty successive slant tracks, each of the groups of slant tracks contains four successive tracks (T2a,T2b,T3a,T3b), each of the slant tracks has four audio sectors (1-E,4-O,3-E,2-O) in the intermediate section thereof and the time code signal is recorded as said user control bytes in the scattered arrangement of the audio sectors of each audio signal segment, which have recorded therein the odd and even samples of one channel and the duplicates thereof.

5. A method according to claim 4,
**characterized in that**
the audio sectors in each slant track are arranged in rows with respect to the audio sectors in the adjacent slant tracks and the scattered arrangement is such that two spaced apart rows of audio sectors for a respective segment contain the even samples (1-E,2-E,3-E,4-E) of respective channels in different orders and the other two rows of audio sectors contain the odd samples (4-O,1-O,2-O,3-O) of respective channels in orders that are different from each other and also different from the orders of the first mentioned two rows.

6. An apparatus for reproducing a time code signal contained in a digital video/audio signal, whereby the digital video/audio signal is recorded on a recording tape in successive slant tracks extending obliquely across the tape in a manner that the audio signal and the time code signal is recorded in intermediate sectors of the tracks, the video signal is located before and after the intermediate sectors and the time code signal is multiplied and identically recorded in the intermediate sectors of several tracks forming a frame,
comprising:
- error detection/correction means (39,49) for detecting and correcting errors at least in the multiplied time code signal and for setting error flags for the bytes of the multiplied time code signal, which have been detected but could not be corrected;
- redistributor means (50) for separating the multiplied time code signal from the digital video/audio signal;
**characterized by**
- time code error detector means (54,55) comprising a memory (55) detecting error flags set by the error detection/correction means (39,49) for each time code signal within the multiplied time code signal, whereby the memory (55) is operated to store the bytes of the time code signal being not erroneous within the multiplied time code signal and appearing for the first time, to store the bytes of the error flags set by the detection/correction means (39,49), if the time code signal is erroneous, and to collect a time code signal within the multiplied time code signal in respect to the stored error flags and the bytes of the time code signals not comprising error flags; and
- a time code reader (56) connected to the time code error detector means (54,55), reading at least once within each frame period the time code stored in the memory (55) and indicating the time code corresponding to the actual frame period, if the memory (55) does not include bytes of error flags, otherwise indicating the bytes of time code corresponding to a previous frame period.

## Patentansprüche

1. Verfahren zur Wiedergabe eines in einem digitalen Video/Audio-Signal enthaltenen Zeitcodesignals, wobei das digitale Video/Audio-Signal auf einem Aufzeichnungsband in aufeinanderfolgenden Schrägspuren, die sich derart schräg über das Band erstrecken, daß das Audiosignal und das Zeitcodesignal in Zwischensektoren der Spuren aufgezeichnet werden, aufgezeichnet ist, wobei das Videosignal vor und hinter den Zwischensektoren angeordnet ist und das Zeitcodesignal multipliziert und identisch in den Zwischensektoren mehrerer einen Rahmen bildenden Spuren aufgezeichnet wird mit den Schritten, daß
- wenigstens das multiplizierte Zeitcodesignal fehlerdetektiert und/oder-korrigiert wird und für die Bytes des multiplizierten Zeitcodesignals, die detektiert worden sind, aber nicht korrigiert werden konnten, Fehlerkennzeichen gesetzt werden, und
- das multiplizierte Zeitcodesignal vom digitalen Video/Audio-Signal separiert wird,
gekennzeichnet durch die Schritte, daß
- die Fehlerkennzeichen des multiplizierten Zeitcodesignals detektiert werden,
- bei fehlerhaftem ersten Zeitcodesignal die im multiplizierten Zeitcodesignal nicht fehlerhaften und das erste Mal erscheinenden Bytes des Zeitcodesignals und das Fehlerkennzeichen der Bytes gespeichert werden,
- im multiplizierten Zeitcodesignal ein Zeitcodesignal in Bezug auf die gespeicherten Fehlerkennzeichen und die Bytes der keine Fehlerkennzeichen enthaltenden Zeitcodesignale gesammelt werden, und
- bei einem Fehlen von keine Fehlerkennzeichen enthaltenden verbleibenden Bytes im gespeicherten Zeitcodesignal das gespeicherte Zeitcodesignal wenigstens einmal in einer Rahmenperiode des Video/Audio-Signals angezeigt wird, andernfalls das Zeitcodesignal einer vorhergehenden Rahmenperiode angezeigt wird.

2. Verfahren nach Anspruch 1,
**dadurch gekennzeichnet**,
daß Abschnitte (V1, V2) der ein Videosignal enthaltenden Spuren relativ lang in Bezug auf die die Sektoren des digitalen Audiosignals und des Zeitcodesignals enthaltenden Zwischenabschnitte (A) sind.

3. Verfahren nach Anspruch 2,
**dadurch gekennzeichnet, daß**
- das digitale Audiosignal in Segmenten, deren jeder in der Dauer mit der zum Abtasten einer Gruppe von mehrere Kanäle des aufzuzeichnenden digitalen Audiosignals enthaltenden Schrägspuren erforderlichen Zeit korrespondiert, verarbeitet wird, wobei jedes der Segmente des Audiosignals Blöcke enthält, die jeweils aus ungeradzahlige und geradzahlige Samples jedes Kanals darstellenden Datenbytes bestehen,
- jeder Block Benutzersteuerbytes aufweist und jede Gruppe Schrägspuren eine Zahl Audiosektoren in den Zwischenabschnitten aufweist, die ausreichen, darin die jeweiligen, mit ungeradzahligen und geradzahligen Samples jedes Kanals und deren Doppel korrespondierenden Blöcke in einer verteilten Anordnung innerhalb der Zwischenabschnitte der korrespondierenden Gruppe Schrägspuren aufzuzeichnen, und
- der Zeitcode in den Benutzersteuerbytes ausgewählter Blöcke jedes mit den ungeradzahligen und geradzahligen Samples wenigstens eines der Kanäle und den Doppeln der ausgewählten Blöcke korrespondierenden Audiosegments aufgezeichnet wird und das Zeitcodesignal für alle Segmente des in den Zwischenabschnitten der mit einem jeweils einzelnen der Rahmen korrespondierenden Schrägspuren aufgezeichneten Audiosignals das gleiche ist.

4. Verfahren nach Anspruch 3,
**dadurch gekennzeichnet**, daß
für jeden Rahmen das digitale Videosignal in zwanzig aufeinanderfolgenden Schrägspuren aufgezeichnet wird, jede der Gruppen Schrägspuren vier aufeinanderfolgende Spuren (T2a, T2b, T3a, T3b) enthält, jede der Schrägspuren vier Audiosektoren (1-E, 4-O, 3-E, 2-O) im Zwischenabschnitt aufweist und das Zeitcodesignal als die Benutzersteuerbytes in der verstreuten Anordnung der Audiosektoren jedes Audiosignalsegements, in denen die ungeradzahligen und geradzahligen Samples eines Kanals und deren Doppel aufgezeichnet sind, aufgezeichnet werden.

5. Verfahren nach Anspruch 4,
**dadurch gekennzeichnet**, daß
in jeder Schrägspur die Audiosektoren in Reihen bezüglich der Audiosektoren in den benachbarten Schrägspuren angeordnet sind und die verteilte Anordnung derart ist, daß zwei räumlich getrennte Reihen Audiosektoren für ein jeweiliges Segment die geradzahligen Samples (1-E, 2-E, 3-E, 4-E) jeweiliger Kanäle in verschiedenen Reihenfolgen und die anderen zwei Reihen Audiosektoren die ungeradzahligen Samples (4-O, 1-O, 2-O, 3-O) jeweiliger Kanäle in voneinander von den Reihenfolgen der zuerst erwähnten zwei Reihen verschiedenen Reihenfolgen enthalten.

6. Vorrichtung zur Wiedergabe eines in einem digitalen Video/Audio-Signal enthaltenen Zeitcodesignals, wobei das digitale Video/Audio-Signal auf einem Aufzeichnungsband in aufeinanderfolgenden, sich derart schräg über das Band erstreckenden Schrägspuren aufgezeichnet ist, daß das Audiosignal und das Zeitcodesignal in Zwischensektoren der Spuren aufgezeichnet sind, wobei sich das Videosignal vor und hinter den Zwischensektoren befindet und das Zeitcodesignal multipliziert und identisch in den Zwischensektoren mehrerer einen Rahmen bildenden Spuren aufgezeichnet ist, bestehend aus:
- einer Fehlerdetektor/Fehlerkorrektur-Einrichtung (39, 49) zum Detektieren und Korrigieren von Fehlern wenigstens im multiplizierten Zeitcodesignal und zum Setzen von Fehlerkennzeichen für die Bytes des multiplizierten Zeitcodesignals, die detektiert worden sind, aber nicht korrigiert werden konnten,
- einer Rückverteilereinrichtung (50) zum Trennen des multiplizierten Zeitcodesignals vom digitalen Video/Audio-Signal,
**gekennzeichnet durch**
- eine Zeitcodefehlerdetektoreinrichtung (54, 55) mit einem Speicher (55), der durch die Fehlerdetektor/Fehlerkorrektur-Einrichtung (39, 49) für jedes Zeitcodesignal innerhalb des multiplizierten Zeitcodesignals gesetzte Fehlerkennzeichen detektiert, wobei der Speicher (55) die innerhalb des multiplizierten Zeitcodesignals nicht fehlerhaften und das erste Mal erscheinenden Bytes des Zeitcodesignals und die von der Detektor/Korrektureinrichtung (39, 49) bei fehlerhaftem Zeitcodesignal gesetzten Bytes der Fehlerkennzeichen speichert und ein Zeitcodesignal im multiplizierten Zeitcodesignal in Bezug auf die gespeicherten Fehlerkennzeichen sowie die keine Fehlerkennzeichen enthaltenden Bytes der Zeitcodesignale sammelt, und
- einen mit der Zeitcode-Fehlerdetektoreinrichtung (54, 55) verbundenen Zeitcodeleser (56), der wenigstens einmal innerhalb einer Rahmenperiode den in dem Speicher (55) gespeicherten Zeitcode liest und bei einem Fehlen von Bytes aus Fehlerkennzeichen im Speicher (55) den mit der tatsächlichen Rahmenperiode korrespondierenden Zeitcode anzeigt, andernfalls die Bytes eines mit einer vorhergehenden Rahmenperiode korrespondierenden Zeitcodes anzeigt.

## Revendications

1. Procédé de reproduction d'un signal de code de temps contenu dans un signal vidéo/audio numérique de telle sorte que le signal vidéo/audio numérique soit enregistré sur une bande d'enregistrement sur des pistes inclinées successives s'étendant à l'oblique sur la bande de telle sorte que le signal audio et que le signal de code de temps soient enregistrés dans des secteurs intermédiaires des pistes, le signal vidéo étant placé avant et après les secteurs intermédiaires et le signal de code de temps étant multiplié et enregistré de façon identique dans les secteurs intermédiaires de plusieurs pistes formant une trame,
comprenant les étapes de :
détection et/ou correction d'erreur d'au moins le signal de code de temps multiplié et établissement d'indicateurs d'erreur pour les octets du signal de code de temps multiplié, lesquels ont été détectés mais ne peuvent pas être corrigés ;
séparation du signal de code de temps multiplié vis-à-vis du signal vidéo/audio numérique,
caractérisé par les étapes de :
détection des indicateurs d'erreur du signal de code de temps multiplié ;
stockage des octets du signal de code de temps qui ne sont pas erronés dans le signal de code de temps multiplié et qui apparaissent pour la première fois et stockage de l'indicateur d'erreur des octets si le premier signal de code de temps est erroné ;
collecte d'un signal de code de temps dans le signal de code de temps multiplié en relation avec les indicateurs d'erreur stockés et les octets des signaux de code de temps ne comprenant pas d'indicateur d'erreur ; et
indication d'au moins une fois dans chaque période de trame du signal vidéo/audio du signal de code de temps stocké s'il ne reste pas d'octets comprenant des indicateurs d'erreur et sinon, indication du signal de code de temps d'une période de trame précédente.

2. Procédé selon la revendication 1, caractérisé en ce que :
des sections (V1, V2) des pistes comprenant un signal vidéo sont relativement longues par rapport aux sections intermédiaires (A) comprenant les secteurs du signal audio numérique et du signal de code de temps.

3. Procédé selon la revendication 2, caractérisé en ce que :
le signal audio numérique est traité selon des segments dont chacun correspond du point de vue de la durée au temps requis pour balayer un groupe de pistes inclinées, comprenant une pluralité de canaux du signal audio numérique qui doit être enregistré, chacun des segments du signal audio inclut des blocs constitués respectivement par des octets de données représentant des échantillons impairs et pairs de chaque canal ;
chaque bloc comprend en outre des bits de commande utilisateur et chaque groupe de pistes inclinées comporte un certain nombre de secteurs audio dans les sections intermédiaires, ce nombre suffisant pour enregistrer dedans les blocs respectifs correspondant à des échantillons impairs et pairs de chaque canal ainsi qu'à leurs duplications selon un agencement éclaté dans les sections intermédiaires du groupe correspondant de pistes inclinées ; et
le code de temps est enregistré en tant que dits octets de commande utilisateur de blocs sélectionnés de chaque segment audio correspondant aux échantillons impairs et pairs d'au moins l'un des canaux et aux duplications des blocs sélectionnés et le signal de code de temps est le même pour tous les segments du signal audio enregistré dans les sections intermédiaires des pistes inclinées correspondant à l'une respective des trames.

4. Procédé selon la revendication 3, caractérisé en ce que :
le signal vidéo numérique pour chaque trame est enregistré sur vingt pistes inclinées successives, chacun des groupes de pistes inclinées contient quatre pistes successives (T₂ₐ, T_{2b}, T₃ₐ, T_{3b}), chacune des pistes inclinées comporte quatre secteurs audio (1-E, 4-O, 3-E, 2-O) dans sa section intermédiaire et le signal de code de temps est enregistré en tant que dits octets de commande utilisateur selon l'agencement éclaté des secteurs audio de chaque segment de signal audio, lesquels se sont vus enregistrer les échantillons impairs et pairs d'un canal et leurs duplications.

5. Procédé selon la revendication 4, caractérisé en ce que :
les secteurs audio contenus dans chaque piste inclinée sont agencés selon des rangées par rapport aux secteurs audio contenus dans les pistes inclinées adjacentes et l'agencement éclaté est tel que deux rangées espacées de secteurs audio pour un segment respectif contiennent les échantillons pairs (1-E, 2-E, 3-E, 4-E) de canaux respectifs selon des ordres différents et les deux autres rangées de secteurs audio contiennent les échantillons impairs (4-O, 1-O, 2-O, 3-O) de canaux respectifs selon des ordres qui sont différents les uns des autres et qui sont également différents des ordres des deux premières rangées mentionnées.

6. Appareil de reproduction d'un signal de code de temps contenu dans un signal vidéo/audio numérique de telle sorte que le signal vidéo/audio numérique soit enregistré sur une bande d'enregistrement sur des pistes inclinées successives s'étendant à l'oblique sur la bande de telle sorte que le signal audio et que le signal de code de temps soient enregistrés dans des secteurs intermédiaires des pistes, le signal vidéo étant placé avant et après les secteurs intermédiaires et le signal de code de temps étant multiplié et enregistré de façon identique dans les secteurs intermédiaires de plusieurs pistes formant une trame ;
comprenant :
un moyen de détection/correction d'erreur (39, 49) pour détecter et corriger des erreurs au moins dans le signal de code de temps multiplié et pour établir des indicateurs d'erreur pour les octets du signal de code de temps multiplié qui ont été détectés mais pas corrigés ;
un moyen de redistributeur (50) pour séparer le signal de code de temps multiplié du signal vidéo/audio numérique,
caractérisé par :
un moyen de détecteur d'erreur de code de temps (54, 55) comprenant une mémoire (55) qui détecte des indicateurs d'erreur établis par le moyen de détection/correction d'erreur (39, 49) pour chaque signal de code de temps dans le signal de code de temps multiplié de telle sorte que la mémoire (55) soit mise en fonctionnement pour stocker les octets du signal de code de temps qui ne sont pas erronés dans le signal de code de temps multiplié et qu'elle fonctionne pour la première fois pour stocker les octets des indicateurs d'erreur établis par le moyen de détection/correction (39, 49) si le signal de code de temps est erroné et pour collecter un signal de code de temps dans le signal de code de temps multiplié en relation avec les indicateurs d'erreur stockés et les octets des signaux de code de temps ne comprenant pas d'indicateur d'erreur ; et
un lecteur de code de temps (56) connecté au moyen de détecteur d'erreur de code de temps (54, 55), qui lit au moins une fois dans chaque période de trame le code de temps stocké dans la mémoire (55) et qui indique le code de temps correspondant à la période de trame réelle si la mémoire (55) n'inclut pas des octets d'indicateurs d'erreur et qui indique sinon les octets du code de temps correspondant à une période de trame précédente.
